# EUROPÄISCHE PATENTSCHRIFT

(11) **EP 3 749 564 B1**
(45) Veröffentlichungstag und Bekanntmachung des Hinweises auf die Patenterteilung: **17.05.2023**
(21) Anmeldenummer: 19711240.2
(22) Anmeldetag: 23.01.2019
(51) Int. Cl.: B62B 3/14

(54) **VON HAND BEWEGBARER TRANSPORTWAGEN**
HAND-PROPELLED TROLLEY
CHARIOT PROPULSÉ À LA MAIN

(30) Priorität: 07.02.2018 DE 202018000613 U; 09.02.2018 DE 202018000661 U
(43) Veröffentlichungstag der Anmeldung: 16.12.2020
(73) Patentinhaber: Eberlein, Martin, 8237 Tankovo (BG)
(72) Erfinder: Eberlein, Martin, 8237 Tankovo (BG)
(86) Internationale Anmeldenummer: PCT/DE2019/000015
(87) Internationale Veröffentlichungsnummer: WO 2019/154449

(56) Entgegenhaltungen:
- EP-A2- 2 284 062
- WO-A1-2016/135142
- DE-A1- 19 643 122
- GB-A- 2 522 291

## Beschreibung

Die Erfindung betrifft einen von Hand bewegbaren Transportwagen, der mit einem gleichen Transportwagen in horizontaler Richtung platzsparend stapelbar ist und der mit einem Fahrgestell, mit einer Schiebeeinrichtung und mit wenigstens einer für das Abstellen oder Tragen von Gegenständen bestimmten Abstelleinrichtung ausgestattet ist, wobei sich in gestapeltem Zustand zwischen zwei Transportwagen ein kleinstmöglicher Abstand ergibt, der im Stapelverbund der beiden Transportwagen einen hinteren Bereich und einen vorderen Bereich entstehen lässt, wobei der hintere Bereich nur vom hinteren eingeschobenen Transportwagen und der vordere Bereich nur vom vorausbefindlichen Transportwagen beansprucht wird, wobei der wenigstens einen Abstelleinrichtung eine mit wenigstens einer ersten und mit wenigstens einer zweiten Wägezelle ausgestattete, mit der wenigstens einen Abstelleinrichtung in Wirkverbindung stehende elektronische Wiegeeinrichtung zugeordnet ist, die zur Ermittlung des Gewichts der von der wenigstens einen Abstelleinrichtung getragenen Gegenstände bestimmt ist, und wobei zumindest die wenigstens eine erste und die wenigstens eine zweite Wägezelle an der wenigstens einen Abstelleinrichtung so angeordnet sind, dass sich in gestapeltem Zustand zweier gleicher Transportwagen die wenigstens eine zweite Wägezelle des eingeschobenen Transportwagens außerhalb des vorderen Bereichs befindet und dass sich umgekehrt die wenigstens eine erste Wägezelle des vorausbefindlichen Transportwagens außerhalb des hinteren Bereichs befindet,

Das Dokument EP 2 284 062 A2 zeigt einen Transportwagen der eingangs genannten Art. In Absatz [0020] und Absatz [0050] werden unterschiedliche Konfigurationen für das Stapeln und den Gebrauch vorgeschlagen. Dies ist verglichen mit der einfachen bekannten Art, Einkaufswagen zu stapeln, sehr aufwendig.

Das Dokument GB 2522291 A offenbart einen Einkaufswagen, der eine Waage aufweist.

Das Dokument DE 196 43 122 A1 beschreibt einen fahrbaren Einkaufswagen, der unter anderem eine elektronische Waage aufweist, wobei die Ladefläche des Einkaufswagens die Auflagefläche für die Waage bildet. Mit der Waage wird das Gesamtgewicht der eingekauften Ware gemessen. Die Waage ist plattenförmig ausgebildet und unmittelbar am Boden der Ladefläche des Korbes des Einkaufswagens angebracht.

Das Dokument WO 2016/135142 befasst sich mit einem System zur Identifikation von Produkten, die sich in einem Einkaufswagen befinden, wobei dieser Einkaufswagen ebenfalls mit einer Waage ausgestattet ist, welche für die Identifikation der Produkte bestimmt ist. Derartige Einkaufswagen sind inzwischen in einem Edeka-Markt im Einsatz.

Den in den beiden letztgenannten Dokumenten beschriebenen Einkaufswagen ist gemeinsam, dass deren Abstelleinrichtung einen relativ dicken Boden aufweisen. Diese Dicke ergibt sich deshalb, weil sich die Waage mit ihrem Volumen entweder direkt an den Boden der Abstelleinrichtung anschließt oder aber bei der Verwendung von modernen Wägezellen, diese in den Boden der Abstelleinrichtung eingearbeitet sind. Dicke Böden bei stapelbaren Transportwagen bewirken, dass die Stapelabstände von in einer Reihe gestapelter Transportwagen sehr groß sind. Letzteres ist von Nachteil, weil bereit zu stellende, nicht genutzte Transportwagen in den Märkten große Stellflächen beanspruchen.

Bei dem im Dokument DE 196 43 122 A1 als Fig. 1 dargestellten Einkaufswagen ist zu vermuten, dass der Boden des Korbes waagrecht angeordnet ist, so dass sich ein solcher Einkaufswagen entweder gar nicht oder nur in völlig unzureichendem Maße mit einem weiteren Einkaufswagen stapeln lässt.

Bei den bei Edeka verwendeten Transportwagen erübrigt sich eine solche Vermutung. Die Bauweise der dort verwendeten Transportwagen ist so, dass diese sich mit gleichen Wagen nicht platzsparend stapeln lassen.

Es ist Aufgabe der Erfindung, eine alternative Anordnung der Wägezellen an einem stapelbaren Transportwagen zu schaffen, so dass sich dieser mit gleichen Transportwagen in horizontaler Richtung platzsparend sehr eng stapeln lässt.

Die Lösung der Aufgabe besteht darin, dass sich in gestapeltem Zustand zweier gleicher Transportwagen (1, 1') die wenigstens eine erste Wägezelle (13) des hinteren eingeschobenen Transportwagens (1) innerhalb des hinteren Bereichs (15) befindet und dass sich umgekehrt die wenigstens eine zweite Wägezelle (14) des vorausbefindlichen Transportwagens (1') innerhalb des vorderen Bereichs (16) befindet, wobei die wenigstens eine erste Wägezelle (13) von der wenigstens einen Abstelleinrichtung (6) ausgehend nach unten und die wenigstens eine zweite Wägezelle (14) von der wenigstens einen Abstelleinrichtung (6) ausgehend nach oben gerichtet ist.

Da sich in gestapeltem Zustand zweier Transportwagen deren Wägezellen innerhalb des hinteren und des vorderen Bereichs befinden und diese Bereiche von den beiden Transportwagen nicht gegenseitig beansprucht werden, können die Wägezellen in angemessener Weise beliebig weit nach unten oder nach oben ragen. Das bedeutet auch, dass weitere zur Wiegeeinrichtung zählende Teile, sofern dies konstruktiv möglich ist, ebenfalls in beiden genannten Bereichen angeordnet werden können. Sind die Transportwagen üblicherweise mit einem Boden zum Abstellen der Gegenstände ausgestattet, kann dieser Boden, wie vom Stand der Technik her bekannt, äußerst dünn gestaltet werden, so dass sich derartige Transportwagen, wie bisher handelsübliche Transportwagen auch, äußerst eng stapeln lassen, was einen sehr großen Vorteil bedeutet. Beim Stapelvorgang zweier gleicher Transportwagen behindern sich die Wägezellen nicht. Gleiches gilt, wenn die zur Energieversorgung der Wiegeeinrichtung vorgesehenen Bauteile ebenfalls im hinteren Bereich und bevorzugt an der Ladeplattform angeordnet sind. Dann nämlich kann die Ladeplattform zusammen mit der Wiegeeinrichtung nebst sämtlicher weiterer dazu erforderlicher Teile als eine einzige Baugruppe angefertigt werden, ohne dass von außen Kabel sichtbar sind.

Die Erfindung wird anhand von schematisch gezeichneten Ausführungsbeispielen näher erläutert. Es zeigt
Fig. 1 einen in Seitenansicht dargestellten, von Hand bewegbaren Transportwagen;
Fig. 2 zwei platzsparend ineinandergeschobene Transportwagen;
Fig. 3 den in Fig. 1 beschriebenen Transportwagen;
Fig. 4 einen Transportwagen, bei dem die wenigstens eine Abstelleinrichtung behälterförmig ausgebildet ist sowie
Fig. 5 ebenfalls in Seitenansicht dargestellt einen weiter entwickelten Transportwagen.

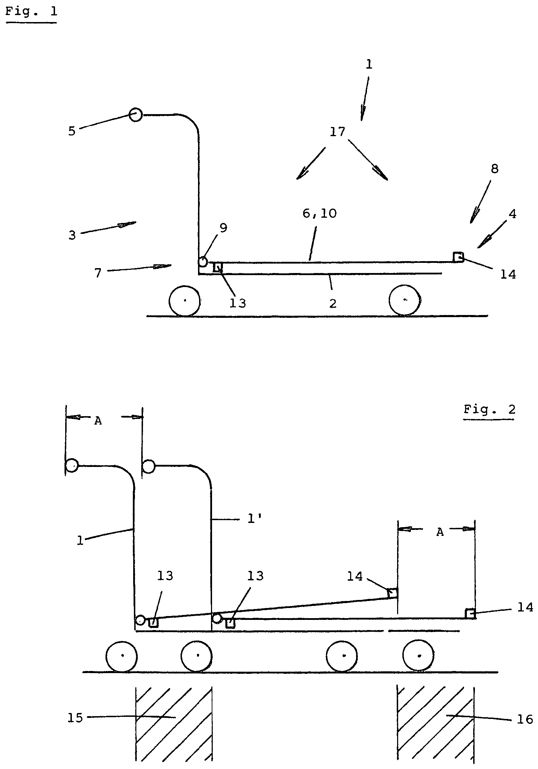

Fig. 1 zeigt in Seitenansicht einen von Hand bewegbaren Transportwagen 1, der mit einem gleichen Transportwagen 1' in horizontaler Richtung platzsparend stapelbar ist, siehe auch Fig. 2. Der Transportwagen 1 weist ein Fahrgestell 2 sowie eine rückseitig angeordnete Schiebeeinrichtung 5 auf. Das Fahrgestell 2 trägt eine Abstelleinrichtung 6, die im Beispiel als Ladeplattform 10 gestaltet ist und auf der sich Gegenstände abstellen lassen. Die Abstelleinrichtung 6 ist um eine an der Rückseite 3 des Fahrgestells 2 befindlichen horizontale Achse 9 nach oben und wieder zurück schwenkbar. An der Vorderseite 4 des Fahrgestells 2 stützt sich die Abstelleinrichtung 6 auf dem Fahrgestell 2 ab. Diese Bauweise ist ebenso bekannt wie die Gestaltung des Fahrgestells 2, das üblicherweise eine konische Form aufweist, die das bekannte Stapeln solcher Transportwagen 1 ermöglicht. Am hinteren Ende 7 der Abstelleinrichtung 6 und nahe der horizontalen Achse 9 ist an der Abstelleinrichtung 6 wenigstens eine erste Wägezelle 13 angeordnet, die sich nach unten erstrecken kann. Am vorderen Ende 8 der Abstelleinrichtung 6 ist wenigstens eine zweite Wägezelle 14 vorgesehen, die sich nach oben erstrecken kann. Auf eine Ladeplattform 10 bezogen bedeutet dies, dass sich die wenigstens eine erste Wägezelle 13 über die Dicke der Ladeplattform 10 hinaus weiter nach unten und die wenigstens eine zweite Wägezelle 14 über die Dicke der Ladeplattform 10 hinaus nach oben erstrecken kann. Die hier vorgeschlagenen Wägezellen 13, 14 gehören zum Stand der Technik und werden z. B. von der deutschen Firma Flintec angeboten.

Zu diesem Angebot zählen u. a. Druckkraft- Zugkraft-, Planar Beam- oder Single Point-Wägezellen, die im Sinne der hier vorliegenden Erfindung wahlweise Verwendung finden können. Die Wägezellen 13, 14, auch unter dem Begriff "Gewichtssensoren" bekannt, gehören zu wenigstens einer elektronischen Wiegeeinrichtung 17, die, mit der wenigstens einen Abstelleinrichtung 6 verbunden, in Wirkverbindung zur Abstelleinrichtung 6 steht und die zur Ermittlung des Gewichts der von der Abstelleinrichtung 6 getragenen Gegenstände bestimmt ist. Jeder Abstelleinrichtung 6 ist eine eigene Wiegeeinrichtung 17 zugeordnet.

Fig. 2 zeigt ebenfalls in Seitenansicht zwei platzsparend ineinandergeschobene, also gestapelte Transportwagen 1, 1' gleicher Bauweise, siehe auch Fig. 1. In der Zeichnung ist der eingeschobene Transportwagen 1 links dargestellt. Der vorausbefindliche Transportwagen 1' befindet sich in der Zeichnung rechts. Beide Transportwagen 1, 1' sind so weit als möglich ineinandergeschoben, was durch die Maße A ersichtlich ist. Dadurch bildet sich bei dieser Anordnung, schraffiert gezeichnet, ein hinterer Bereich 15 und ein vorderer Bereich 16. In bekannter Weise wird der hintere Bereich 15 nur vom eingeschobenen Transportwagen 1 und der vordere Bereich 16 nur vom vorausbefindlichen Transportwagen 1' beansprucht. Anhand der Zeichnung ist ersichtlich, dass die wenigstens eine erste und die wenigstens eine zweite Wägezelle 13, 14 an der Abstelleinrichtung 6 der beiden Transportwagen 1, 1' so angeordnet sind, dass sich die wenigstens eine erste Wägezelle 13 des hinteren eingeschobenen Transportwagens 1 innerhalb des hinteren Bereichs 15 und die wenigstens eine zweite Wägezelle 14 des eingeschobenen Transportwagens 1' außerhalb des vorderen Bereichs 16 befinden. Umgekehrt bedeutet dies, dass sich die wenigstens eine erste Wägezelle 13 des vorausbefindlichen Transportwagens 1' außerhalb des hinteren Bereichs 15 und die wenigstens eine zweite Wägezelle 14 des vorausbefindlichen Transportwagens 1' innerhalb des vorderen Bereichs 16 befinden. In Fachkreisen werden der hintere Bereich 15 und der vordere Bereich 16 jeweils auch als "Stapeltotraum" bezeichnet.

Außer den Wägezellen 13, 14 lassen sich durchaus auch noch andere, der Wiegeeinrichtung 17 angehörende Bauteile am Transportwagen so anbringen, dass sich diese in gestapeltem Zustand zweier Transportwagen 1, 1' ebenfalls im hinteren und/oder im vorderen Bereich 15, 16 befinden.

Transportwagen 1 sind meist hinten und/oder vorne mit Schwenkrollen ausgestattet. Es sind Transportgeräte 1 bekannt, die vorne nur eine Schwenkrolle aufweisen, beispielsweise als Gepäckwagen, und es sind Transportgeräte 1 bekannt, die vorne zwei Rollen aufweisen. Gemäß einer vorteilhaften Ausführung ist der Transportwagen 1 hinten und/oder vorne mit Schwenkrollen ausgestattet und es ist der hintere Bereich 15 und der vordere Bereich 16 in Schieberichtung des Transportwagens 1 jeweils kürzer als der Durchmesser des Störkreises der Schwenkrollen und/oder kürzer als das Eineinhalbfache des Durchmessers der von den Laufflächen der Schwenkrollen beschriebenen Kreise. Der Durchmesser des Störkreises ist gleich dem Zweifachen des Schwenkradius einer Schwenkrolle. Sind die Wägezellen 13, 14 in derart kurzen hinteren Bereichen 15 und vorderen Bereichen 16 angeordnet, wirkt sich die Ausstattung eines Transportgeräts 1 mit einer Wiegeeinrichtung 17 nicht nachteilig auf die Größe bekannter optimierter Stapelabstände aus.

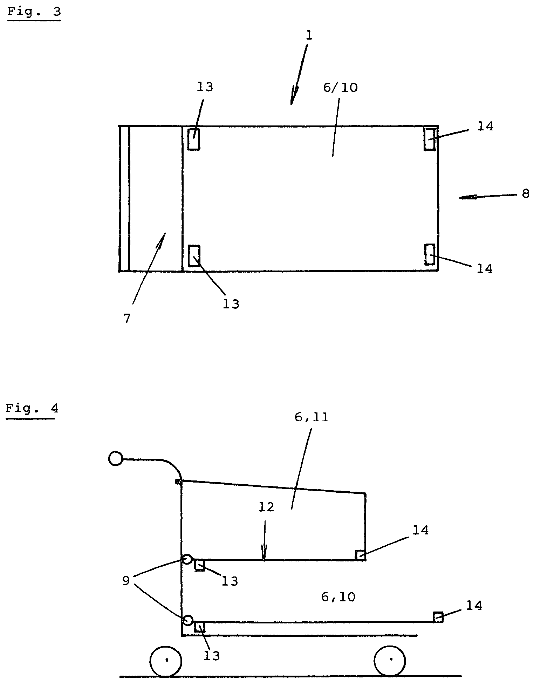

Fig. 3 zeigt den in Fig. 1 beschriebenen Transportwagen 1 in Draufsicht. An der als Ladeplattform 10 gestalteten Abstelleinrichtung 6 sind am hinteren Ende 7 zwei erste Wägezellen 13 und am vorderen Ende 8 zwei zweite Wägezellen 14 geometrisch regelmäßig angeordnet. Von oben betrachtet bilden die Wägezellen 13, 14 ein Rechteck. Werden nur eine erste und eine zweite Wägezelle 13, 14 benötigt wird vorgeschlagen, diese entweder auf der Mittellängsachse des Transportwagens 1 oder auf der entsprechenden Querachse anzuordnen. Es können auch mehr als vier Wägezellen 13, 14 vorgesehen sein. Bei allen Ausführungsbeispielen können die ersten Wägezellen 13 in einem Abstand zum hinteren Ende 7 der wenigstens einen Abstelleinrichtung 6 und die zweiten Wägezellen 14 in einem Abstand zum vorderen Ende 8 der wenigstens einen Abstelleinrichtung 6 angeordnet sein.

Gemäß einer vorteilhaften Ausführung ist die horizontal größte Ausdehnung der wenigstens einen ersten Wägezelle 13 und/oder der wenigstens einen zweiten Wägezelle 14 größer als der Stapelabstand zweier Transportwagen und es steht die Richtung der horizontal größten Ausdehnung der Wägezellen 13, 14 in einem Winkel zur Schieberichtung des Transportwagens. In der Darstellung der Fig. 3 steht die Richtung der horizontal größten Ausdehnung der Wägezelle in rechtem Winkel zur Schieberichtung des Transportwagens 1. Der sich in Schieberichtung erstreckende Stapelabstand zweier Transportwagen ist in Fig. 2 als Abstand "A" gezeigt.

Aus Fig. 4 geht hervor, dass die Abstelleinrichtung 6 eines Transportwagens 1 auch in Form eines Behälters 11 gestaltet werden kann, etwa so, wie man dies von herkömmlichen Einkaufswagen her kennt. Der Boden 12 der so gestalteten Abstelleinrichtung 6 bildet im Grunde eine Ladeplattform 10, die von Seitenwänden begrenzt ist. Die wenigstens eine erste Wägezelle 13 und die wenigstens eine zweite Wägezelle 14 sind wieder so angeordnet, wie dies bereits vorab beschrieben worden ist. Auch kann unterhalb der oben angeordneten Abstelleinrichtung 6 eine zweite Abstelleinrichtung 6 mit den entsprechenden Wägezellen 13, 14 vorgesehen sein. Um ein platzsparendes Stapeln gleicher Transportwagen 1 zu ermöglichen kann der Boden 12 der Abstelleinrichtung 6, wie bei einer Ladeplattform 10 auch, um eine horizontale Achse 9 nach oben schwenkbar ausgebildet sein. Gleiches gilt auch, wenn die komplette, als Behälter 11 gestaltete Abstelleinrichtung 6 um eine horizontale Achse 9 und innerhalb eines ebenfalls durch Anschläge festgelegten Schwenkbereichs nach oben und wieder zurück schwenkbar am Fahrgestell 2 angeordnet ist. In beiden Fällen muss die Rückwand des Behälters 11 in bekannter Weise ebenfalls schwenkbar ausgebildet sein. Derartige Gestaltungen einer als Behälter 11 ausgebildeten Abstelleinrichtung 6 erlauben es, den Boden 12 einer solchen Abstelleinrichtung 6 in waagrechter Gebrauchslage zu halten, da ganz allgemein eine waagrechte Anordnung des Bodens 12 oder einer Ladeplattform 10 den Wiegevorgang im Sinne einer exakten Gewichtsermittlung wesentlich erleichtern. Diese Feststellung gilt für alle hier beschriebenen Ausführungsbeispiele.

Außer den Wägezellen 13, 14 lassen sich durchaus auch noch andere, der Wiegeeinrichtung 17 angehörende oder die Funktion der Wiegeeinrichtung 17 ermöglichende oder unterstützende Bauteile am Transportwagen 1 so anbringen, dass sich diese in gestapeltem Zustand zweier Transportwagen 1, 1' zumindest im hinteren Bereich 15 befinden.

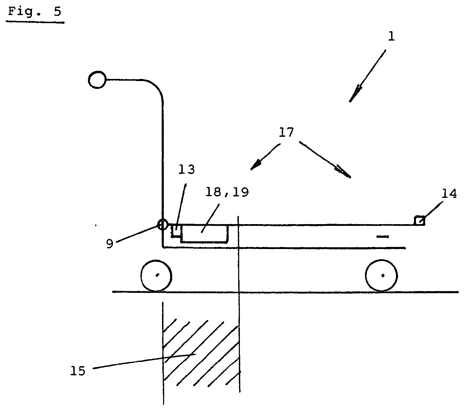

Fig. 5 zeigt daher einen Transportwagen 1, bei dem sich beispielsweise die zur Energieversorgung der Wiegeeinrichtung 17 bestimmte Batterieanordnung 18 im hinteren Bereich 15 des Transportwagens 1 befindet. Erfolgt eine Energieübertragung zum Transportwagen 1 auf induktive Weise, wird vorgeschlagen, die wenigstens eine am Transportwagen 1 befindliche Empfangsspule 19 ebenfalls im hinteren Bereich 15 anzuordnen. Gleiches gilt für weitere mögliche elektronische Steuerungsteile und dergleichen. Dabei erweist es sich als vorteilhaft, wenn alle eben beschriebenen Bau- oder Funktionsteile innerhalb des hinteren Bereichs 15 an der Ladeplattform 10 angebracht sind und dabei den nach unten zur Verfügung stehenden Raum ebenfalls nutzen. Da insbesondere die Batterieanordnung 18 ein nicht unerhebliches Gewicht aufweist, macht es Sinn, die Batterieanordnung 18 ganz nahe an der horizontalen Achse 9 anzuordnen, um durch das Gewicht der Batterieanordnung 18 das Stapeln der Transportwagen 1, 1', 1" nicht sonderlich zu erschweren. Gleiches gilt auch für alle anderen vorab genannten Teile, die in der Zeichnung insgesamt als Paket dargestellt sind.

Die Erfindung lässt dem Fachmann für die Gestaltung der Abstelleinrichtung 6 freien Raum.

Beispielsweise kann eine Rahmeneinheit oder Trageeinheit um eine an der Rückseite 3 des Fahrgestells 2 befindliche horizontale Achse 9 schwenkbar gelagert sein. An der Rahmeneinheit sind die Wägezellen 13, 14 befestigt und an den Wägezellen ist wiederum die Ladeplattform 10 befestigt, die als Abstelleinrichtung 6 dient. Man kann eine Abstelleinrichtung 6 auch so gestalten, dass diese beispielsweise zum Einhängen, also zum Tragen von Taschen geeignet ist, die zur Aufnahme der Gegenstände bestimmt sind. Überhaupt empfiehlt es sich, die beschriebenen Transportwagen 1 in SB-Märkten einzusetzen. Da in solchen Märkten eine Vielzahl von Transportwagen 1 für die Kunden zur Verfügung stehen müssen und weil diese Vielzahl an Transport- oder Einkaufswagen auch platzsparend bereit gestellt werden müssen, sind die hier vorgeschlagenen Transportwagen 1 zur Erfüllung dieser Forderung bestens geeignet.

## Patentansprüche

1. Von Hand bewegbarer Transportwagen (1), der mit einem gleichen Transportwagen (1') in horizontaler Richtung platzsparend stapelbar ist und der mit einem Fahrgestell (2), mit einer Schiebeeinrichtung (5) und mit wenigstens einer für das Abstellen oder Tragen von Gegenständen bestimmten Abstelleinrichtung (6) ausgestattet ist, wobei sich in gestapeltem Zustand zwischen zwei Transportwagen (1, 1') ein kleinstmöglicher Abstand ergibt, der im Stapelverbund der beiden Transportwagen (1, 1') einen hinteren Bereich (15) und einen vorderen Bereich (16) entstehen lässt, wobei der hintere Bereich (15) nur vom hinteren eingeschobenen Transportwagen (1) und der vordere Bereich (16) nur vom vorausbefindlichen Transportwagen (1') beansprucht wird, wobei der wenigstens einen Abstelleinrichtung (6) eine mit wenigstens einer ersten und mit wenigstens einer zweiten Wägezelle (13, 14) ausgestattete, mit der wenigstens einen Abstelleinrichtung (6) in Wirkverbindung stehende elektronische Wiegeeinrichtung (17) zugeordnet ist, die zur Ermittlung des Gewichts der von der wenigstens einen Abstelleinrichtung (6) getragenen Gegenstände bestimmt ist, und wobei zumindest die wenigstens eine erste und die wenigstens eine zweite Wägezelle (13, 14) an der wenigstens einen Abstelleinrichtung (6) so angeordnet sind, dass sich in gestapeltem Zustand zweier gleicher Transportwagen (1, 1') die wenigstens eine zweite Wägezelle (14) des eingeschobenen Transportwagens (1) außerhalb des vorderen Bereichs (16) befindet und dass sich umgekehrt die wenigstens eine erste Wägezelle (13) des vorausbefindlichen Transportwagens (1') außerhalb des hinteren Bereichs befindet, **dadurch gekennzeichnet, dass** sich in gestapeltem Zustand zweier gleicher Transportwagen (1, 1') die wenigstens eine erste Wägezelle (13) des hinteren eingeschobenen Transportwagens (1) innerhalb des hinteren Bereichs (15) befindet und dass sich umgekehrt die wenigstens eine zweite Wägezelle (14) des vorausbefindlichen Transportwagens (1') innerhalb des vorderen Bereichs (16) befindet, wobei die wenigstens eine erste Wägezelle (13) von der wenigstens einen Abstelleinrichtung (6) ausgehend nach unten und die wenigstens eine zweite Wägezelle (14) von der wenigstens einen Abstelleinrichtung (6) ausgehend nach oben gerichtet ist.

2. Transportwagen nach Anspruch 1, **dadurch gekennzeichnet, dass** in Draufsicht betrachtet die ersten und die zweiten Wägezellen (13, 14) in geometrisch regelmäßiger Form an der wenigstens einen Abstelleinrichtung (6) angeordnet sind.

3. Transportwagen nach Anspruch 1, **dadurch gekennzeichnet, dass** die horizontal größte Ausdehnung der wenigstens einen ersten Wägezelle (13) und/oder der wenigstens einen zweiten Wägezelle (14) größer ist als der Stapelabstand zweier Transportwagen (1, 1') und daß die Richtung der horizontal größten Ausdehnung der Wägezellen (13, 14) in einem Winkel zur Schieberichtung des Transportwagens steht.

4. Transportwagen nach Anspruch 1, **dadurch gekennzeichnet, dass** der Transportwagen (1) hinten und/oder vorne mit Schwenkrollen ausgestattet ist und dass der hintere Bereich (15) und der vordere Bereich (16) in Schieberichtung des Transportwagens (1) jeweils kürzer ist als der Störkreis der Schwenkrollen und/oder kürzer ist als das Eineinhalbfache des Durchmessers der von den Laufflächen der Schwenkrollen beschriebenen Kreise.

5. Transportwagen nach Anspruch 1, **dadurch gekennzeichnet, dass** die wenigstens eine erste Wägezelle (13) in einem Abstand zum hinteren Ende (7) der wenigstens einen Abstelleinrichtung (6) und die wenigstens eine zweite Wägezelle (14) in einem Abstand zum vorderen Ende (8) der wenigstens einen Abstelleinrichtung (6) angeordnet ist.

6. Transportwagen nach Anspruch 1, **dadurch gekennzeichnet, dass** bei einer als Behälter (11) gestalteten Abstelleinrichtung (6) entweder deren Boden (12) oder die gesamte Abstelleinrichtung (6) innerhalb eines festgelegten Schwenkbereichs um eine horizontale Achse (9) schwenkbar ist.

7. Transportwagen nach Anspruch 1, **dadurch gekennzeichnet, dass** die zur Energieversorgung der elektronischen Wiegeeinrichtung (17) erforderlichen Bauteile, etwa eine Batterieanordnung (18) und/oder wenigstens eine für induktive Energieübertragung bestimmte Empfängerspule (19) im hinteren Bereich (15) angeordnet sind.

8. Transportwagen nach Anspruch 1, **dadurch gekennzeichnet, dass** die zur Energieversorgung der elektrischen Wiegeeinrichtung (17) erforderlichen Bauteile an der Ladeplattform (10) angeordnet sind und sich nach unten erstrecken.

## Claims

1. Manually movable transport trolley (1) which can be stacked with an identical transport trolley (1') in the horizontal direction in a space-saving manner and which is equipped with a chassis (2), with a pushing device (5) and with at least one receiving device (6) intended for receiving or carrying objects, wherein, in the stacked state, there results a smallest possible distance between two transport trolleys (1, 1') that, in the stacked assembly of the two transport trolleys (1, 1'), gives rise to a rear region (15) and a front region (16), wherein the rear region (15) is taken up only by the rear inserted transport trolley (1), and the front region (16) is taken up only by the transport trolley (1') in front, wherein the at least one receiving device (6) is assigned an electronic weighing device (17) which is equipped with at least one first and with at least one second weighing cell (13, 14), is operatively connected to the at least one receiving device (6) and is intended to determine the weight of the objects carried by the at least one receiving device (6), and wherein at least the at least one first and the at least one second weighing cell (13, 14) are arranged on the at least one receiving device (6) in such a way that, in the stacked state of two identical transport trolleys (1, 1'), the at least one second weighing cell (14) of the inserted transport trolley (1) is outside the front region (16) and that, conversely, the at least one first weighing cell (13) of the transport trolley (1') in front is outside the rear region, **characterized in that**, in the stacked state of two identical transport trolleys (1, 1'), the at least one first weighing cell (13) of the rear inserted transport trolley (1) is inside the rear region (15), and **in that**, conversely, the at least one second weighing cell (14) of the transport trolley (1') in front is inside the front region (16), wherein the at least one first weighing cell (13) is directed downwards starting from the at least one receiving device (6), and the at least one second weighing cell (14) is directed upwards starting from the at least one receiving device (6).

2. Transport trolley according to Claim 1, **characterized in that**, as considered in plan view, the first and the second weighing cells (13, 14) are arranged in a geometrically regular form on the at least one receiving device (6).

3. Transport trolley according to Claim 1, **characterized in that** the horizontally largest extent of the at least one first weighing cell (13) and/or of the at least one second weighing cell (14) is greater than the stacking distance between two transport trolleys (1, 1'), and **in that** the direction of the horizontally largest extent of the weighing cells (13, 14) is at an angle to the pushing direction of the transport trolley.

4. Transport trolley according to Claim 1, **characterized in that** the transport trolley (1) is equipped at the rear and/or front with pivot rollers, and **in that**, in the pushing direction of the transport trolley (1), the rear region (15) and the front region (16) are each shorter than the swing circle of the pivot rollers and/or are shorter than one and a half times the diameter of the circles described by the running surfaces of the pivot rollers.

5. Transport trolley according to Claim 1, **characterized in that** the at least one first weighing cell (13) is arranged at a distance from the rear end (7) of the at least one receiving device (6), and the at least one second weighing cell (14) is arranged at a distance from the front end (8) of the at least one receiving device (6).

6. Transport trolley according to Claim 1, **characterized in that**, in the case of a receiving device (6) configured as a container (11), either the bottom (12) thereof or the entire receiving device (6) is pivotable about a horizontal axis (9) within a fixed pivoting region.

7. Transport trolley according to Claim 1, **characterized in that** the components required for the power supply of the electronic weighing device (17), for instance a battery arrangement (18) and/ or at least one receiver coil (19) intended for inductive power transmission, are arranged in the rear region (15).

8. Transport trolley according to Claim 1, **characterized in that** the components required for the power supply of the electronic weighing device (17) are arranged on the loading platform (10) and extend downwards.

## Revendications

1. Chariot de transport (1) déplaçable manuellement, qui peut être empilé en direction horizontale avec un chariot de transport (1') identique de manière à gagner de la place et qui est équipé d'un châssis (2), d'un dispositif de poussée (5) et d'au moins un dispositif de dépôt (6) destiné à déposer ou porter des objets, une distance minimale étant obtenue à l'état empilé entre deux chariots de transport (1, 1') qui, dans la combinaison empilée des deux chariots de transport (1, 1'), laisse une zone arrière (15) et une zone avant (16), la zone arrière (15) n'étant occupée que par le chariot de transport (1) inséré à l'arrière et la zone avant (16) n'étant occupée que par le chariot de transport (1') se trouvant à l'avant, un dispositif de pesée électronique (17) équipé d'au moins une première et d'au moins une deuxième cellule de pesée (13, 14), en liaison active avec l'au moins un dispositif de dépôt (6) étant associé à l'au moins un dispositif de dépôt (6), qui est destiné à déterminer le poids des objets portés par l'au moins un dispositif de dépôt (6), et au moins l'au moins une première et l'au moins une deuxième cellule de pesée (13, 14) étant agencées sur l'au moins un dispositif de dépôt (6) de telle sorte qu'à l'état empilé de deux chariots de transport (1, 1') identiques, l'au moins une deuxième cellule de pesée (14) du chariot de transport (1) inséré se trouve à l'extérieur de la zone avant (16) et qu'inversement l'au moins une première cellule de pesée (13) du chariot de transport (1') se trouvant à l'avant se trouve à l'extérieur de la zone arrière, **caractérisé en ce qu'à** l'état empilé de deux chariots de transport (1, 1') identiques, l'au moins une première cellule de pesée (13) du chariot de transport (1) inséré à l'arrière se trouve à l'intérieur de la zone arrière (15) et qu'inversement l'au moins une deuxième cellule de pesée (14) du chariot de transport (T) se trouvant à l'avant se trouve à l'intérieur de la zone avant (16), l'au moins une première cellule de pesée (13) étant orientée vers le bas à partir de l'au moins un dispositif de dépôt (6) et l'au moins une deuxième cellule de pesée (14) étant orientée vers le haut à partir de l'au moins un dispositif de dépôt (6).

2. Chariot de transport selon la revendication 1, **caractérisé en ce qu'en** vue de dessus, la première et la deuxième cellules de pesée (13, 14) sont agencées sur l'au moins un dispositif de dépôt (6) selon une forme géométrique régulière.

3. Chariot de transport selon la revendication 1, **caractérisé en ce que** l'extension horizontale maximale de l'au moins une première cellule de pesée (13) et/ou de l'au moins une deuxième cellule de pesée (14) est supérieure à la distance d'empilement de deux chariots de transport (1, 1') et **en ce que** la direction de l'extension horizontale maximale des cellules de pesée (13, 14) forme un angle avec la direction de poussée du chariot de transport.

4. Chariot de transport selon la revendication 1, **caractérisé en ce que** le chariot de transport (1) est équipé de roulettes pivotantes à l'arrière et/ou à l'avant et **en ce que** la zone arrière (15) et la zone avant (16) dans la direction de poussée du chariot de transport (1) sont respectivement plus courtes que le cercle de passage des roulettes pivotantes et/ou plus courtes qu'une fois et demie le diamètre des cercles décrits par les surfaces de roulement des roulettes pivotantes.

5. Chariot de transport selon la revendication 1, **caractérisé en ce que** l'au moins une première cellule de pesée (13) est agencée à une distance de l'extrémité arrière (7) de l'au moins un dispositif de dépôt (6) et l'au moins une deuxième cellule de pesée (14) est agencée à une distance de l'extrémité avant (8) de l'au moins un dispositif de dépôt (6).

6. Chariot de transport selon la revendication 1, **caractérisé en ce que,** dans le cas d'un dispositif de dépôt (6) conçu sous forme de contenant (11), soit son fond (12), soit l'ensemble du dispositif de dépôt (6) peut pivoter autour d'un axe horizontal (9) dans une plage de pivotement définie.

7. Chariot de transport selon la revendication 1, **caractérisé en ce que** les composants nécessaires à l'alimentation en énergie du dispositif de pesée électronique (17), par exemple un agencement de batterie (18) et/ou au moins une bobine de réception (19) destinée à la transmission d'énergie par induction, sont agencés dans la zone arrière (15).

8. Chariot de transport selon la revendication 1, **caractérisé en ce que** les composants nécessaires à l'alimentation en énergie du dispositif de pesée électrique (17) sont agencés sur la plate-forme de chargement (10) et s'étendent vers le bas.
